# EUROPÄISCHE PATENTSCHRIFT

(11) **EP 2 580 854 B1**
(45) Veröffentlichungstag und Bekanntmachung des Hinweises auf die Patenterteilung: **01.08.2018**
(21) Anmeldenummer: 10726469.9
(22) Anmeldetag: 11.06.2010
(51) Int. Cl.: H02M 1/32, H02M 7/483

(54) **UMRICHTER MIT SCHALTERÜBERWACHUNG**
CONVERTER WITH SWITCH MONITORING
CONVERTISSEUR DOTÉ D'UN DISPOSITIF DE SURVEILLANCE DE COMMUTATEUR

(43) Veröffentlichungstag der Anmeldung: 17.04.2013
(73) Patentinhaber: Siemens Aktiengesellschaft, 80333 München (DE)
(72) Erfinder: EULER, Ingo, 91056 Erlangen (DE); GAMBACH, Herbert, 91080 Uttenreuth (DE); LANG, Jörg, 95346 Stadtsteinach (DE); SCHREMMER, Frank, 90768 Fürth (DE); TU, Quoc-Buu, 90574 Rosstal (DE)
(86) Internationale Anmeldenummer: PCT/EP2010/058228
(87) Internationale Veröffentlichungsnummer: WO 2011/154047

(56) Entgegenhaltungen:
- DE-A1-102007 018 344
- US-A1- 2009 141 416
- THURIES E ET AL: "Improvement of high voltage switchgear reliability", TRENDS IN DISTRIBUTION SWITCHGEAR, 1994., FOURTH INTERNATIONAL CONFERE NCE ON LONDON, UK, LONDON, UK,IEE, UK, 1. Januar 1994 (1994-01-01), Seiten 145-149, XP006512600, DOI: DOI:10.1049/CP:19941079 ISBN: 978-0-85296-624-2

## Beschreibung

Die Erfindung betrifft einen Umrichter für Anwendungen im Hochspannungsbereich mit in Reihe geschalteten zweipoligen Submodulen, die jeweils einen Energiespeicher und eine Leistungshalbleiterschaltung mit ein- und abschaltbaren Leistungshalbleitern aufweisen, wobei die Leistungshalbleiterschaltung so mit dem Energiespeicher verbunden ist, dass an Anschlussklemmen eines jeden Submoduls die an dem Energiespeicher abfallende Spannung oder aber eine Nullspannung erzeugbar ist, einer Regelungseinheit, die mit den Leistungshalbleitern zum Ein- und Abschalten verbunden ist, und mechanischen Schaltern, die parallel zu jedem Submodul angeordnet und zum Überbrücken des zugeordneten Submoduls eingerichtet sind.

Ein solcher Umrichter ist beispielsweise aus der DE 10 2007 018 344 A1 bereits bekannt. Dort ist ein so genannter modularer Mehrstufenumrichter beschrieben, der Phasenbausteine aufweist, die sich zwischen zwei gegensinnig polarisierten Gleichspannungsanschlüssen erstrecken. Jeder Phasenbaustein verfügt über einen Wechselspannungsanschluss zum Anschluss einer Phase eines Wechselspannungsnetzes. Die Phasenbausteine weisen Reihenschaltungen von zweipoligen Submodulen auf, die über einen Kondensator sowie über mehrere Leistungshalbleiterschalter verfügen, so dass an zwei Ausgangsklemmen eines jeden Submoduls entweder die an dem Kondensator abfallende Kondensatorspannung oder aber eine Nullspannung erzeugbar ist. Damit im Fehlerfall eines Submoduls der Umrichter seinen Betrieb insgesamt fortsetzen kann, muss das fehlerbehaftete Submodul überbrückt werden. Aus diesem Grunde ist jedem Submodul ein Brückenschalter parallel geschaltet. Der Brückenschalter ist in der besagten Offenlegungsschrift als Vakuumschaltröhre ausgestattet.

Die WO 2009/092621 A1 beschreibt ebenfalls einen Brücken- oder Kurzschlussschalter für ein Submodul eines modularen Multilevelumrichters, wobei jedoch der mechanische Schalter einen pyrotechnischen Antrieb aufweist.

Bei den bisherigen Submodulen wird der Brückenschalter im Fehlerfall nach festgelegten Kriterien ausgelöst und von seiner geöffneten in seine geschlossene Stellung überführt. In seiner geschlossenen Stellung überbrückt der Schalter das parallel angeordnete Submodul. Ein Auslösekriterium zum Überbrücken des parallelen Submoduls liegt für den Schalter beispielsweise dann vor, wenn ein zuvor erfasster Spannungsmesswert einen festgelegten Schwellenwert über eine gewisse Zeitdauer hinweg überschreitet oder wenn es zu einer starken Änderung der Spannung in einer kurzen Zeitdauer kommt. Im Bedarfsfall lösen zwei redundante Zündkreise unabhängig voneinander den Brückenschalter aus. Die Ausfallwahrscheinlichkeit des Brückenschalters ist durch diese Redundanz zwar herabgesetzt. Den bisher bekannten Umrichtern haftet jedoch der Nachteil an, dass die Regelungseinheit keine dahingehende Rückmeldung erhält, ob der Brückenschalter auch tatsächlich geschlossen und das Submodul überbrückt ist. Daher kann es dazu kommen, dass ein hoher Kurzschlussstrom über das fehlerhafte Submodul getrieben wird, der unerwünschte Beschädigungen am Umrichter bewirken kann.

In dem Beitrag von Kreusel, J. et al. "Condition-Monitoring in Hoch- und Mittelspannungsschaltanlagen", der in Elektrizitätswirtschaft Jg. 94 (1995), Heft 7, Seiten 350 bis 358 erschienen ist, sind Zustandsüberwachungsmittel für Hoch- und Mittelspannungsschaltanlagen beschrieben. Zum Überwachen des Schaltzustandes mechanischer Schalter werden beispielsweise Kameras, Bewegungssensoren oder Messsensoren vorgeschlagen, die einen über die Kontakte des Schalters fließenden Schaltstrom erfassen. Diese Überwachungsmittel eignen sich jedoch nicht für die eingangs beschriebenen modularen Multilevelumrichter im Hochspannungsbereich, da der Umrichter für solche Spannungsebenen mehrere hundert Submodule aufweisen kann, so dass entsprechend viele Brückenschalter notwendig sind. Die bisher bekannten Zustandsüberwachungsmittel wären einfach zu kostenintensiv.

In der US 2009/0141416 A1 wird eine Einrichtung zum Kurzschließen von Leistungshalbleitermodulen beschrieben, in welcher die Kurzschließeinrichtung ein pyrotechnischmechanisches Element ist. Die Einrichtung umfasst zudem einen Hilfskontakt, der dazu verwendet werden kann, zu überprüfen, ob das pyrotechnisch-mechanische Element nach einer Zündung ausgelöst hat. Die Anordnung und Funktionsweise des Hilfskontaktes werden in der US 2009/0141416 A1 nicht thematisiert.

In dem Artikel "Improvement of high voltage switchgear reliability" von Thuries E. et. al. wird die Verwendung von Lichtwellenleitern und optischen Sensoren zur Erfassung einer Position eines Schalters beschrieben.

Aufgabe der Erfindung ist es daher, einen Umrichter der eingangs genannten Art bereitzustellen, dessen Brückenschalter kostengünstig auf ihren jeweiligen Schaltzustand überwacht werden können.

Die Erfindung löst diese Aufgabe dadurch, dass jeder mechanische Schalter Zustandsüberwachungsmittel zum Überwachen seines Auslösens aufweist, wobei die Zustandsüberwachungsmittel mit der Regelungseinheit verbunden sind und eine Signalleitung aufweisen, die so über den zugeordneten mechanischen Schalter geführt ist, dass ein Auslösen des besagten mechanischen Schalters die Signalleitung unterbricht.

Erfindungsgemäß ist jeder mechanische Schalter des Umrichters mit Zustandsüberwachungsmitteln ausgerüstet, die das Auslösen des mechanischen Schalters überwachen. Dabei sind die Zustandsüberwachungsmittel mit der Regelungseinheit verbunden, die somit in Kenntnis des Schaltzustands des jeweiligen mechanischen Schalters oder mit anderen Worten Brückenschalters ist. Um die Kosten eines solchen Umrichters zu beschränken, sind im Rahmen der Erfindung die Zustandsüberwachungsmittel als einfache und kostengünstige Signalleitungen ausgeführt, die so über den jeweiligen mechanischen Schalter geführt sind, dass ein Auslösen des zugeordneten Brückenschalters die Signalleitung unterbricht. Das Unterbrechen der Signalleitung wird von der jeweiligen Regelungseinheit festgestellt, so dass die Regelungseinheit, die beispielsweise eine Zentralregelungseinheit oder aber eine Regelungseinheit speziell für das jeweilige Submodul ist, in Kenntnis des Schaltzustandes des jeweiligen mechanischen Schalters ist. Die Regelungseinheit kann im Bedarfsfall zweckmäßige Maßnahmen einleiten. Signalleitungen sind kostengünstig erhältlich, so dass durch die erfindungsgemäße Überwachung des Schaltzustandes der mechanische Schalter keine hohen Zusatzkosten ausgelöst werden.

Zweckmäßigerweise ist die Signalleitung ein geschlossener Leiterkreis, der mit einer Ruhespannung beaufschlagt ist. Eine solche Ausgestaltung der Signalleitung ist besonders kostengünstig. Die Ruhespannung treibt beispielsweise einen Ruhestrom, der durch einen zweckmäßigen Sensor erfasst wird.

Bei einer abweichenden Variante der Erfindung ist die Signalleitung ein Lichtwellenleiter, der eingangsseitig mit einem optischen Signal beaufschlagt wird, wobei ein ausgangsseitig des Lichtwellenleiters angeordneter Sensor das austretende optische Signal erfasst. Bei einer Unterbrechung des Lichtwellenleiters kommt es somit auch zu einem Ende des Nachweises des optischen Signals. Die Regelungseinheit, die beispielsweise mit dem Sensor zum Erfassen des optischen Signals über eine Kommunikationsleitung verbunden ist, kann daraufhin die entsprechenden Maßnahmen einleiten.

Zweckmäßigerweise sind zwei Signalleitungen vorgesehen. Durch diese doppelte redundante Signalleitung ist eine höhere Sicherheit bei der Auslöseüberwachung geschaffen.

Bei einer bevorzugten Ausgestaltung der Erfindung verfügt der mechanische Schalter über einen pyrotechnischen Antrieb. Mit Hilfe des pyrotechnischen Antriebs kommt es zu einer einmaligen Schaltbewegung mit einer hohen Schaltgeschwindigkeit und -kraft. Aufgrund der hohen Schaltkraft wird die jeweilige Signalleitung sicher durchtrennt.

Die Regelungseinheit kann sowohl eine zentrale Regelungseinheit als auch und eine Vielzahl von dezentralen Ventilzweigregelungseinheiten aufweisen, wobei die zentrale Regelungseinheit und/oder die Ventilzweigregelungseinheiten mit den Zustandsüberwachungsmitteln verbunden sind. Gemäß dieser Ausgestaltung der Erfindung übermittelt die zentrale Regelungseinheit Zweigspannungssollwerte an die jeweilige Ventilzweigregelungseinheit, die jeweils einem Ventilzweig des Umrichters zugeordnet ist. Ein Ventilzweig erstreckt sich zwischen dem Wechselspannungsanschluss und jeweils einem der Gleichspannungsanschlüsse eines Phasenmoduls des Umrichters.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel des erfindungsgemäßen Umrichters in einer schematischen Darstellung und
- Figur 2: ein Phasenbaustein des erfindungsgemäßen Umrichters gemäß Figur 1 genauer verdeutlichen.

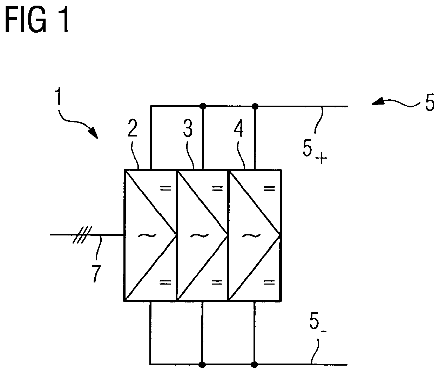

Figur 1 zeigt ein Ausführungsbeispiel des erfindungsgemäßen Umrichters 1, der drei Phasenbausteine 2, 3 und 4 aufweist, die sich zwischen zwei Gleichspannungsanschlüssen erstrecken, die jeweils mit einem positiv geladenen Pol 5+ und einem negativ geladenen Pol 5- eines Gleichspannungszwischenkreises 5 verbunden sind. Darüber hinaus weist jeder Phasenbaustein 2, 3 oder 4 einen Wechselspannungsanschluss zum Anschluss einer Phase 7 eines nicht dargestellten Wechselspannungsnetzes auf, das mit dem Umrichter 1 über einen nicht gezeigten Transformator oder eine sonstige Induktivität verbunden ist. Der Gleichspannungszwischenkreis 5 ist beispielsweise mit einem weiteren nicht gezeigten Umrichter verbunden, der ebenfalls an ein Wechselspannungsnetz angeschlossen ist. Über die Umrichter und den Gleichspannungszwischenkreis 5 ist somit die Übertragung von elektrischer Energie ermöglicht. Solche Anlage sind als solche bekannt und werden vom Fachmann auch als Hochspannungsgleichstromübertragungs-(HGÜ)-anlage bezeichnet.

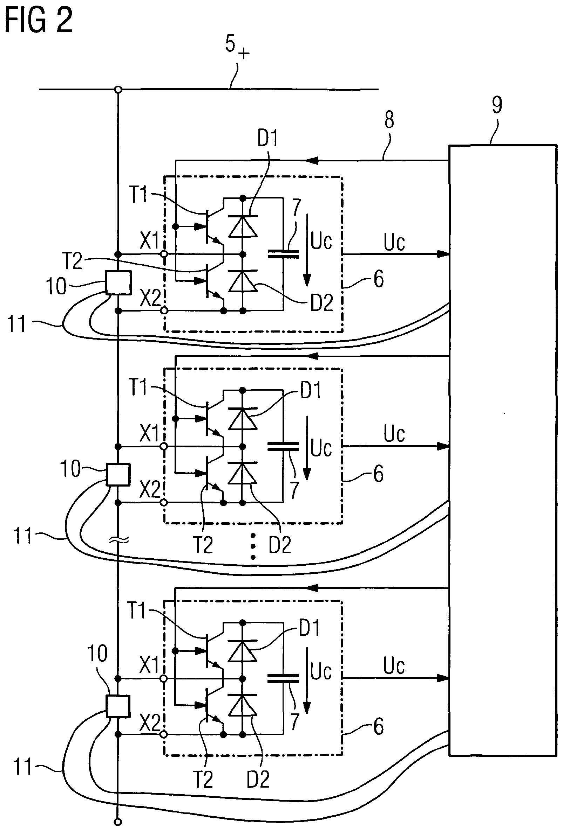

Figur 2 zeigt den Aufbau des Umrichters und insbesondere den Aufbau eines Phasenmoduls 2 genauer, wobei darauf hingewiesen wird, dass die anderen Phasemodule 3 oder 4 identisch zu dem Phasenmodul 2 ausgestaltet sind. Es ist erkennbar, dass das Phasenmodul 2 eine Reihenschaltung von Submodulen 6 aufweist, die zweipolig ausgebildet sind und die beiden Anschlussklemmen x1 und x2 aufweisen. Jedes Submodul 6 verfügt über einen Energiespeicher 7, der in dem gezeigten Ausführungsbeispiel ein Kondensator ist. An dem Kondensator 7 fällt Kondensatorspannung Uc ab. Darüber hinaus verfügt jedes Submodul 6 über eine Leistungshalbleiterschaltung, die in dem gezeigten Ausführungsbeispiel zwei an- und abschaltbaren Leistungshalbleitern T1 und T2 aufweist, wobei jedem dieser an- und abschaltbaren Leistungshalbleitern T1 und T2 jeweils eine Freilaufdiode D1 beziehungsweise D2 gegensinnig parallel geschaltet ist. Die erste Anschlussklemme x1 ist mit dem Potenzialpunkt zwischen den Freilaufdioden beziehungsweise zwischen den an- und abschaltbaren Leistungshalbleiterschaltern T1 und T2 verbunden. Die zweite Anschlussklemme x2 liegt auf dem gleichen Potenzial wie eine der Elektroden des Kondensators 7. Ist der Leistungshalbleiterschalter T2 geschlossen und befindet sich T1 in seiner Durchgangsstellung, fällt an den Ausgangsklemmen x1, x2 des jeweiligen Submoduls die Kondensatorspannung Uc ab. Im umgekehrten Fall ist hingegen an den Anschlussklemmen eine Nullspannung erzeugt.

An dieser Stelle sei angemerkt, dass anstelle der in Figur 2 gezeigten Halbbrückenschaltung eines jeden Submoduls auch eine so genannte Vollbrückenschaltung im Rahmen der Erfindung möglich ist, bei der vier an- und abschaltbare Leistungshalbleiterschalter, beispielsweise IGBTs, GTOs oder dergleichen, zum Einsatz gelangen können. Bei einer Vollbrückenschaltung kann an den Ausgangsklemmen eines jeden Submoduls neben der Kondensatorspannung und der Nullspannung auch die inverse Kondensatorspannung -Uc erzeugt werden.

Durch die Reihenschaltung der Submodule 6 kann die Spannung, die an einem Ventilzweig abfällt, der sich zwischen dem Wechselspannungsanschluss 7 und dem jeweiligen Gleichspannungsanschluss 5+ erstreckt, stufenweise eingestellt werden. Die Höhe der Stufen ist durch die Kondensatorspannung Uc bestimmt. Zum zweckmäßigen An- und Abschalten der Leistungshalbleiter T1 und T2 sind diese über eine Steuerungsleitung 8 mit einer Regelungseinheit 9 verbunden, welche anhand eines Regelalgorithmus die zweckmäßigen Steuersignale für die Leistungshalbleiterschalter T1 und T2 des gesamten Phasenmoduls bereitstellen. Hierzu wird ihr von dem jeweiligen Submodul die Kondensatorspannung Uc über eine nicht gezeigte Signalleitung übermittelt.

Damit der Umrichter 1 bei Ausfall eines Submoduls 6 seinen Betrieb insgesamt fortsetzen kann, muss das fehlerhafte Submodul 6 überbrückt werden. Ansonsten würde ein zu hoher Strom über das fehlerhafte Submodul getrieben, der eine irreversible Beschädigung des Umrichters verursachen könnte. Zum Überbrücken ist parallel zu jedem Submodul 6 ein mechanischer Schalter 10 angeordnet, der hier auch als Brückenschalter bezeichnet wird. Der mechanische Schalter 10 ist in dem in Figur 2 gezeigten Ausführungsbeispiel eine Vakuumschaltröhre mit pyrotechnischem Antrieb. Im Normalbetrieb, also dann, wenn das parallel geschaltete Submodul 6 fehlerfrei arbeitet, befindet sich die Vakuumschaltröhre 10 in ihrer geöffneten Stellung. Ein Stromfluss über den mechanischen Schalter 10 ist daher nicht möglich. Stellt eine nicht gezeigte Überwachungseinrichtung des jeweiligen Submoduls 6 beispielsweise einen zu schnellen Strom- oder Spannungsanstieg fest, kommt es zum Auslösen des Schalters und somit zur Überbrückung des fehlerhaften Submoduls 6, wobei der mechanische Schalter 10 in seine Kontaktstellung überführt wird. Zum Nachweis dieses Auslösens des jeweiligen Schalters 10 ist die Regelungseinheit 9 über Signalleitungen 11 mit jedem mechanischen Schalter 10 des Umrichters 1 verbunden. Im gezeigten Ausführungsbeispiel ist die Signalleitung 11 ein geschlossener Leiter aus Kupferdraht, der bei Auslösung des Schalters 10 unterbrochen wird. Dabei ist der Leiterkreis 11 mit einem Strom oder einer Spannung beaufschlagt, welcher von der Regelungseinheit 9 fortwährend überwacht wird. Kommt es zu einer Unterbrechung des Stromflusses über den Leiterkreis, stellt die Regelungseinheit 9 das Auslösen des jeweiligen Schalters 10 fest und leitet zweckmäßige Maßnahmen ein. Beispielsweise ergeht eine Fehlermeldung und der Hinweis, dass das fehlerhafte Submodul bei der nächsten Wartung des Umrichters ausgetauscht werden muss.

Wie bereits weiter oben ausgeführt wurde, kann die Regelungseinheit auch redundant ausgeführt sein.

## Patentansprüche

1. Umrichter (1) für Anwendungen im Hochspannungsbereich mit
- in Reihe geschalteten zweipoligen Submodulen (6), die jeweils einen Energiespeicher (7) und eine Leistungshalbleiterschaltung mit ein- und abschaltbaren Leistungshalbleitern (T₁,T₂) aufweisen, wobei die Leistungshalbleiterschaltung so mit dem Energiespeicher (7) verbunden ist, dass an Anschlussklemmen (x1,x2) eines jeden Submoduls (1) die an dem Energiespeicher abfallende Spannung oder aber eine Nullspannung erzeugbar ist,
- einer Regelungseinheit (9), die mit den Leistungshalbleitern (T₁,T₂) zum Ein- und Abschalten verbunden ist und
- mechanischen Schaltern (10), die parallel zu jedem Submodul (6) angeordnet und zum Überbrücken des zugeordneten Submoduls (6) eingerichtet sind,
**dadurch gekennzeichnet, dass**
jeder mechanische Schalter (16) Zustandsüberwachungsmittel zum Überwachen seines Auslösens aufweist, wobei die Zustandsüberwachungsmittel mit der Regelungseinheit (9) verbunden sind und eine Signalleitung (11) aufweisen, die so über den zugeordneten mechanischen Schalter (10) geführt ist, dass ein Auslösen des besagten mechanischen Schalters (10) die Signalleitung (11) unterbricht.

2. Umrichter (1) nach Anspruch 1,
**dadurch gekennzeichnet, dass**
die Signalleitung ein geschlossener Leiterkreis (11) ist, der mit einer Ruhespannung beaufschlagt ist.

3. Umrichter (1) nach Anspruch 1,
**dadurch gekennzeichnet, dass**
die Signalleitung (11) ein Lichtwellenleiter ist, der eingangsseitig mit einem optischen Signal beaufschlagt wird, wobei ein ausgangsseitig des Lichtwellenleiters angeordneter Sensor das optische Signal erfasst.

4. Umrichter (1) nach einem der vorhergehenden Ansprüche,
**dadurch gekennzeichnet, dass**
zwei Signalleitungen (11) vorgesehen sind.

5. Umrichter (1) nach einem der vorhergehenden Ansprüche,
**dadurch gekennzeichnet, dass**
der mechanische Schalter (16) einen pyrotechnischen Antrieb aufweist.

6. Umrichter (1) nach einem der vorhergehenden Ansprüche,
**dadurch gekennzeichnet, dass**
die Regelungseinheit (9) Ventilzweigregelungseinheiten aufweist, die jeweils einem Ventilzweig zugeordnet sind, wobei jede Ventilzweigregelungseinheit mit den Zustandsüberwachungsmitteln des zugeordneten Ventilzweigs verbunden ist, der sich zwischen dem Wechselspannungsanschluss (7) und einem der Gleichspannungsanschlüsse (5+,5-) des Umrichters (1 erstreckt und eine Reihenschaltung von Submodulen (6) aufweist.

## Claims

1. Converter (1) for applications in the high-voltage range comprising
- two-pole submodules (6) connected in series, which each have an energy store (7) and a power semiconductor circuit comprising power semiconductors (T₁, T₂) that can be switched on and off, wherein the power semiconductor circuit is connected to the energy store (7) in such a way that the voltage dropped across the energy store or else a zero voltage can be generated at connection terminals (xl, x2) of each submodule (6),
- a control unit (9), which is connected to the power semiconductors (T₁, T₂) for the purpose of switch-on and switch-off and
- mechanical switches (10), which are arranged in parallel with each submodule (6) and configured to bypass the associated submodule (6),
**characterized in that**
each mechanical switch (10) has state monitoring means for monitoring the triggering thereof, wherein the state monitoring means are connected to the control unit (9) and have a signal line (11), which is conducted via the associated mechanical switch (10) in such a way that triggering of said mechanical switch (10) interrupts the signal line (11).

2. Converter (1) according to Claim 1, **characterized in that** the signal line is a closed conductor circuit (11), which is supplied with a quiescent voltage.

3. Converter (1) according to Claim 1, **characterized in that** the signal line (11) is an optical fibre, which is supplied on the input side with an optical signal, wherein a sensor arranged on the output side of the optical fibre detects the optical signal.

4. Converter (1) according to one of the preceding claims, **characterized in that** two signal lines (11) are provided.

5. Converter (1) according to one of the preceding claims, **characterized in that** the mechanical switch (10) has a pyrotechnic drive.

6. Converter (1) according to one of the preceding claims, **characterized in that** the control unit (9) has valve branch control units, which are each associated with a valve branch, wherein each valve branch control unit is connected to the state monitoring means of the associated valve branch, which extends between the AC voltage connection (7) and one of the DC voltage connections (5+, 5-) of the converter (1) and has a series circuit of submodules (6).

## Revendications

1. Convertisseur (1) pour des applications dans le domaine de la haute tension, comprenant
- des sous-modules (6) bipolaires, qui sont montés en série et qui ont chacun un accumulateur (7) d'énergie et un circuit à semi-conducteur de puissance, ayant des semi-conducteurs de puissance (T₁, T₂) pouvant être passants et bloqués, le circuit à semi-conducteur de puissance étant relié à l'accumulateur (7) d'énergie, de manière à pouvoir obtenir aux bornes (x1, x2) de chaque sous-module (1) la tension chutant aux bornes de l'accumulateur d'énergie ou une tension égale à zéro,
- une unité (9) de régulation, qui, pour la mise à l'état passant et à l'état bloqué, est reliée aux semi-conducteurs (T₁, T₂) de puissance et
- des interrupteurs (10) mécaniques, qui sont montés en parallèle à chaque sous-module (6) et qui sont conçus pour shunter le sous-module (6) associé,
**caractérisé en ce que**
chaque interrupteur (16) mécanique a des moyens de contrôle d'état pour contrôler son déclenchement, les moyens de contrôle d'état étant reliés à l'unité (9) de régulation et ayant une ligne (11) de signal, qui passe par les interrupteurs (10) mécaniques associés, de manière à ce qu'un déclenchement dudit interrupteur (10) mécanique interrompe la ligne (11) de signal.

2. Convertisseur (1) suivant la revendication 1,
**caractérisé en ce que**
la ligne de signal est un circuit (11) conducteur fermé, auquel est appliquée une tension de repos.

3. Convertisseur (1) suivant la revendication 1,
**caractérisé en ce que**
la ligne (11) de signal est un conducteur d'ondes lumineuses, qui reçoit du côté de l'entrée un signal optique, un capteur, monté du côté de la sortie du conducteur d'ondes lumineuses, détectant le signal optique.

4. Convertisseur (1) suivant l'une des revendications précédentes,
**caractérisé en ce qu'**
il est prévu deux lignes (11) de signal.

5. Convertisseur (1) suivant l'une des revendications précédentes,
**caractérisé en ce que**
l'interrupteur (16) mécanique a un entraînement pyrotechnique.

6. Convertisseur (1) suivant l'une des revendications précédentes,
**caractérisé en ce que**
l'unité (9) de régulation a des unités de régulation de branche de soupape, qui sont associées respectivement à une branche de soupape, chaque unité de régulation de branche de soupape étant reliée aux moyens de contrôle d'état de la branche de soupape associée, qui s'étend entre la borne (7) de tension alternative et une borne (5+, 5-) de tension continue du convertisseur (1) et qui a un circuit série de sous-modules (6).
